(19) Europäisches Patentamt / European Patent Office / Office européen des brevets

(11) **EP 4 493 881 B1**

(12) **EUROPEAN PATENT SPECIFICATION**

(45) Date of publication and mention
of the grant of the patent:
**23.07.2025 Bulletin 2025/30**

(21) Application number: **23712571.1**

(22) Date of filing: **15.03.2023**

(51) International Patent Classification (IPC):
**F28D 19/04** *(2006.01)* **F28D 17/02** *(2006.01)*

(52) Cooperative Patent Classification (CPC):
**F28D 19/042; F28D 17/02**

(86) International application number:
**PCT/FI2023/050144**

(87) International publication number:
**WO 2023/175238 (21.09.2023 Gazette 2023/38)**

(54) **A RECUPERATIVE HEAT EXCHANGER AND A METHOD OF PRODUCING A MATRIX FOR A RECUPERATIVE HEAT EXCHANGER**

REKUPERATIVER WÄRMETAUSCHER UND VERFAHREN ZUR HERSTELLUNG EINER MATRIX FÜR EINEN REKUPERATIVEN WÄRMETAUSCHER

ÉCHANGEUR DE CHALEUR À RÉCUPÉRATION ET PROCÉDÉ DE FABRICATION D'UNE MATRICE POUR UN ÉCHANGEUR DE CHALEUR À RÉCUPÉRATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.03.2022 FI 20225229**

(43) Date of publication of application:
**22.01.2025 Bulletin 2025/04**

(73) Proprietor: **Teknologian tutkimuskeskus VTT Oy**
**02150 Espoo (FI)**

(72) Inventors:
• **KULMALA, Ilpo**
**02150 Espoo (FI)**
• **HEINONEN, Kimmo**
**02150 Espoo (FI)**
• **SALMELA, Hannu**
**02150 Espoo (FI)**

(74) Representative: **Laine IP Oy**
**Porkkalankatu 24**
**00180 Helsinki (FI)**

(56) References cited:
WO-A1-2021/173023    DE-A1- 3 424 159
US-A- 3 733 791    US-A- 3 965 695
US-A1- 2022 057 147

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The invention relates to a heat exchanger. The invention also relates to a method of producing a matrix of a heat exchanger.

BACKGROUND

Approximately 30 % of the energy delivered to buildings is dissipated in the ventilation and exfiltration air streams. In buildings constructed to very high standards of thermal insulation, the proportion of airborne energy loss can be much higher. The energy losses of the ventilation cause costs at the consumer level and impacts on primary energy need and greenhouse gas emissions.
The amount of energy consumed is dependent on the flow rate of ventilation and the amount of conditioning of the air that is necessary to achieve thermal comfort. Additional energy is needed to drive mechanical ventilation systems, cool air by refrigeration or evaporation and maintain acceptable humidity levels.
Heat losses caused by the ventilation can be reduced by a heat exchanger that is placed within the supply and exhaust air streams of the ventilation system. Heat is transferred in the heat exchanger from the exhaust air stream to the supply air stream. There are several types of heat exchangers that can be used in air-to-air heat exchange applications, for example, plate heat exchanger and run-around coil heat exchanger and regenerative heat exchanger.
The most efficient types of heat exchangers in heating, ventilation and air conditioning (HVAC) applications are regenerative heat exchangers, such as rotary heat exchanger and fixed matrix counterflow heat exchangers. In regenerative heat exchanger heat from the warm fluid is intermittently stored in a thermal storage medium before it is transferred to the cool fluid. The thermal storage is typically a matrix made of heat absorbing material. Examples of such regenerative heat exchangers are disclosed in US 3965695 A, WO 2021/173023 A1, DE 3424159 A1, US 2022/057147 A1, and US 3733791 A.
A rotary heat exchanger comprises a rotary wheel having a matrix of heat absorbing material. The matrix has small fluid flow channels extending through the rotary wheel in an axial direction thereof. The rotary wheel is rotated slowly within the supply and exhaust fluid streams of the system. As the rotary wheel rotates, heat is picked up from the exhaust fluid stream in one half of the rotation and given up to the supply fluid stream in the other half of the rotation. Heat energy from the exhaust fluid stream is transferred to the matrix material and from the matrix material to the supply fluid stream, thus raising the temperature of the supply fluid stream by an amount proportional to the temperature differential between fluid streams, surface area available for the heat transfer, and heat transfer coefficient. Heat exchange is most efficient when the supply and exhaust streams flow in opposite directions. The fixed matrix counterflow heat exchanger comprises at least one fixed matrix through which supply and exhaust fluid streams alternately pass. One such heat exchanger is described in DE 3224277 A1.

SUMMARY

The object of the present invention is to increase heat transfer in a matrix of a heat exchanger, particularly a recuperative heat exchanger, and thus improve the efficiency of the heat exchanger.
According to one aspect of the present disclosure there is provided a recuperative heat exchanger featuring a matrix made of heat absorbing material and has a plurality of fluid flow channels extending there through in a flow direction of fluid. The flow channels comprise channel sections that are successive in the flow direction and at least partly staggered relative to each other.
According to another aspect of the present disclosure there is provided a method of producing such a matrix with an additive manufacturing technique.
The present invention is defined by the appended independent claims.
Some embodiments may include one or more features from the following itemized list:

- the successive channel sections of the flow channel are staggered in a transverse direction of said flow channel;
- the successive channel sections are staggered relative to each other in two directions that are transverse in respect to each other and both transverse in respect to the flow direction or flow channel;
- the flow channels comprise two or more than two, preferably three or more than three, successive channel sections;
- the successive channel sections are staggered such that an edge of the outlet opening of the channel section crosses an inlet opening of the following channel section;
- the edge of the outlet opening of the channel section crosses the centre of the inlet opening of the following channel section;

- every other channel section in the fluid flow direction is placed at the same transverse location;
- the successive channel sections are staggered such that the outlet opening of the channel section is in direct fluid flow communication with inlet openings of at least two following channel sections;
- the flow channels have a rectangular, triangular, polygonal or sinusoidal cross-sectional shape;
- the matrix is constructed as a rotary wheel;
- the heat exchanger is a rotary heat exchanger, which comprises a casing, the matrix constructed as a rotary wheel mounted on the casing, and a drive unit for rotating the rotary wheel about a rotation axis.

Significant benefits can be achieved by means of the invention.

The matrix according to the invention comprises several successive channels sections in the flow direction of fluid. The successive channel sections are staggered relative to each other in a transverse direction of the flow channel, typically both in horizontal and vertical directions. In this way air flowing through the matrix encounters a new start and development of boundary layer over the whole perimeter of each channel section. In the entrance region of the channel sections the heat transfer rate is significantly higher than in the fully developed region. The length of the staggered channel sections is selected so that the flow will not reach fully developed conditions, resulting in increased heat transfer.

The improved efficiency enables the reduction of the size of the heat exchanger, which, in turn, facilitates the use of the heat exchanger in new applications. The staggering of the flow channel sections may somewhat increase the pressure drop of the gas flowing through the heat exchanger, but the amount of energy required to cover the pressure loss is remarkably smaller than achieved energy saving.

In the traditional heat exchangers airflows inside the matrix in continuous flow passages, and the peripheral areas of the matrix do not properly participate in the heat recovery and transfer in all applications. In the present invention the airflow in the matrix is periodically displaced in the transverse direction of the flow channels, and the entire wetted perimeter of the matrix can be utilized in the heat transfer.

Further, the staggered channel sections form discontinuities which prevent or at least decrease heat conduction in the matrix in the fluid flow direction. This further increases the thermal efficiency of the heat exchanger.

BRIEF DESCRIPTION OF THE DRAWINGS

In the following, the invention is described by way of examples with reference with to the accompanying drawings, in which:

FIGURE 1a      shows a schematical perspective view of a partially sectioned exemplary rotary heat exchanger;

FIGURE 1b      shows an enlarged view of the matrix of the rotatory heat exchanger of FIGURE1a;

FIGURE 2a      shows a schematic perspective view of a conventional matrix with straight flow channels;

FIGURE 2b      shows an enlarged top elevation view of the matrix of FIGURE 2a;

FIGURE 3a      shows a perspective view of a matrix that can be used in a heat exchangers according to an embodiment of the invention of FIGURE 1a;

FIGURE 3B      shows an enlarged top elevation view of the matrix of FIGURE 3a;

FIGURE 4a      shows a schematic perspective view of a matrix according to another embodiment of the invention with successive flow channel sections;

FIGURE 4b      shows an enlarged top elevation view of the matrix of FIGURE 4a;

FIGURE 5      shows a perspective elevation view of a matrix according to one embodiment;

FIGURE 6      shows an isometric detail view of one flow channel of the matrix of FIGURE 5;

FIGURE 7      shows a diagram representing measured and theoretically anticipated results for the relationship between airflow and efficiency achieved with a conventional heat exchanger and a heat exchanger according to one embodiment of the present invention;

FIGURE 8      shows the diagram of FIGURE 7 with relevant values indicated with dashed lines, and

FIGURE 9      shows a diagram representing test results and relationship between airflow rate and the corresponding pressure drop across the matrix of a test heat exchanger.

EMBODIMENTS

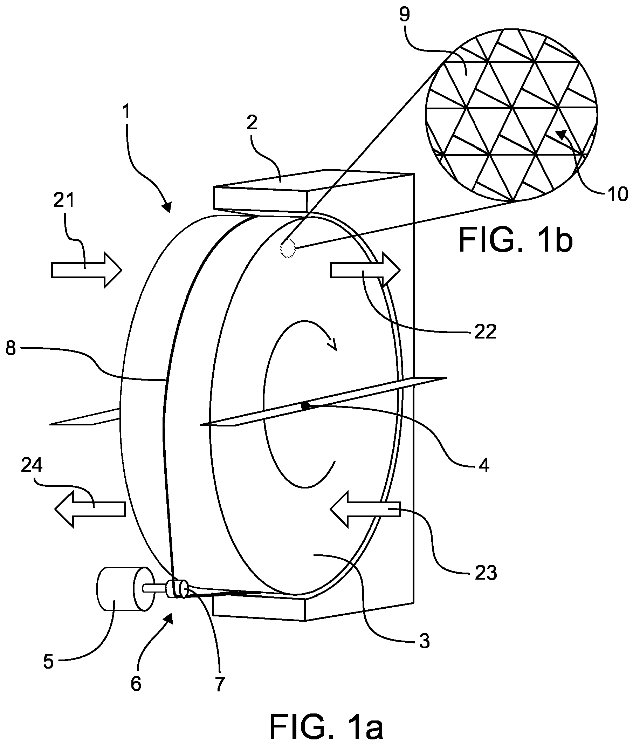

FIGURE 1 shows a rotary heat exchanger 1 that can be positioned within supply and exhaust fluid streams of a ventilation system or an industrial process in order to recover heat energy. The rotary heat exchanger 1 comprises a casing 2 and a rotary wheel 3 mounted on the casing 2. The rotary wheel 3 is configured to rotate about a rotation axis 4. The rotary wheel 3 transfers heat and/or moisture from the exhaust fluid to the supply fluid, or vice versa, as it rotates. It is, however, to be noted that the principles herein disclosed for a rotary wheel application are applicable to a counter or cross flow matrix with separate channels for different flows for recuperative purposes.

The rotary heat exchanger 1 further comprises a drive unit 6 for for rotating the rotary wheel 3 about a rotation axis 4. The drive unit comprises a drive motor 5 and a belt drive system. The drive motor may be an electric motor, typically a constant speed or variable speed motor. The belt drive system comprises a pulley 7 connected to an output of the drive motor 5. The belt drive system further comprises a drive belt 8 arranged around a periphery of the rotary wheel 3 and the pulley 7. The drive motor 5 rotates the pulley 6, and rotational motion is transmitted to the rotary wheel 3 by means of the drive belt 8.

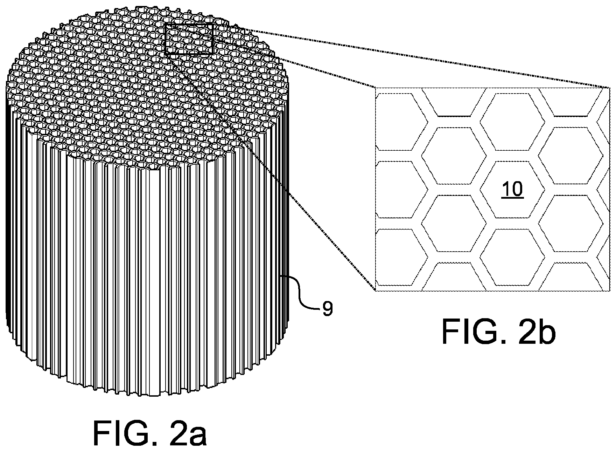

The rotary wheel 3 comprises a matrix 9 of heat-absorbing material, such as aluminium, plastic, or synthetic fiber. As can be seen from FIGURE 2, the matrix 9 has a plurality of flow channels 10 for fluid, such as air or other gas. The flow channels 10 extend through the matrix 9 in a flow direction of the fluid. The flow channels 10 are parallel. The flow channels 10 extend parallel to the rotation axis 4 of the rotary wheel 3. The flow channels 10 may have a quadrangular, rectangular, triangular, polygonal or sinusoidal cross-sectional shape. The height and/or width of the flow channels 10 is typically 1-3 mm. The depth of the rotary wheel 3 is 150-250 mm, typically 200 mm.

In use, the rotary wheel 3 is rotated within the supply and exhaust fluid streams, such as air/gas streams of the heat recovery system. As the rotary wheel 3 rotates, heat is picked up from the exhaust fluid stream in one half of the rotation and given up to the supply fluid stream in the other half of the rotation. Thus waste heat energy and/or moisture from the exhaust fluid stream is transferred to the matrix 9 of the rotary wheel 3 and then from the matrix 9 to the supply fluid stream, or vice versa. The supply fluid stream and the exhaust fluid stream are flowing through the matrix 9 in opposite directions. FIGURE 1 shows the exemplary rotary heat exchanger 1 being fitted into a building for recovering heat from air being vented out of the building. Accordingly, outside air 21 enters the rotary wheel 3 from the ambient side and heated by the warm matrix 9. Warmed outside air exits on the building side as supply air 22. Fully warm return air 23 enters the matrix 9 at the building side and heats the matrix 9. By passing through the matrix the air transfers heat into the matrix and exits on the ambient side as exhaust air 24.

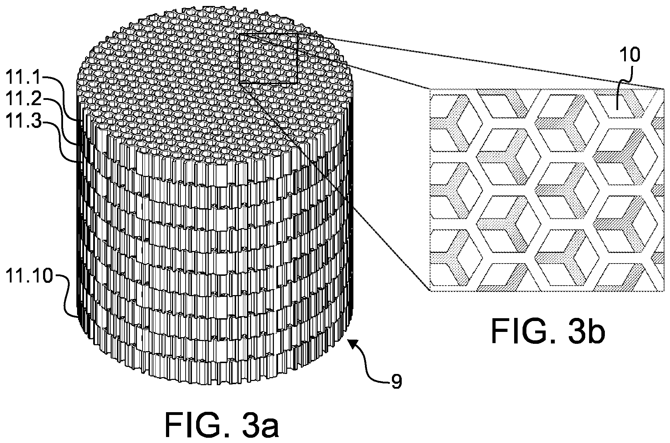

An exemplary structure of the matrix 9 and flow channels 10 is shown in more detail in FIGURES 3a and 3b. The flow channels 10 comprise flow channel sections 11 that are successive in the flow direction of fluid and staggered or at least partly staggered relative to each other. This in in comparison with a conventional matrix 9 shown in FIGURES 2a and 2b exhibiting straight, un-staggered flow channels 10. FIGURE 3a shows a layered matrix with 10 mutually superposed and successively translated channel sections 11.1 to 11.10. The successive channel sections 11.1 ... 11.10 are staggered, i.e. deviated, in a transverse direction of the flow channels 10 in respect to the preceding channel sections 11.1 ... 11.10. The transverse direction of the flow channel 10 is perpendicular to the fluid flow direction in said flow channel 10. The transverse direction of the flow channel 10 is perpendicular to the rotation axis 4 of the rotary wheel 3 (embodiment of FIGURE 1). The illustrated exemplary flow channels exhibit a hexagonal cross-section.

Typically, the successive channel sections 11 are staggered relative to each other in two directions that are transverse in respect to each other and that are both transverse in respect to the flow direction or the flow channel 10. Said two transverse directions are typically perpendicular or within 20° of perpendicular to each other.

The flow channels 10 comprise at least 3 successive flow channel sections 11. The number successive flow channel sections 11 is dependent on the total length of the flow channels 10, length of the developing flow in the flow channels 10 and allowable pressure drop of the flow over the matrix 9, which, in turn, depends on the geometry of the flow channels 10, fluid flow velocity and the thermodynamic properties of the fluid. The length of the channel sections 11 is selected so that the fluid flow in the channel section 11 will not reach fully developed conditions. The successive channel sections 11 have a same cross-sectional shape and/or size.

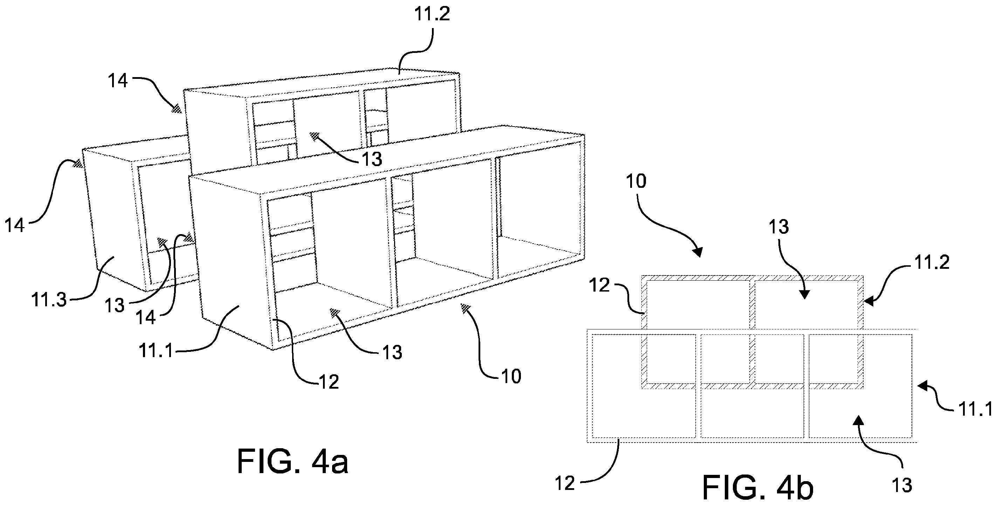

FIGURES 4a and 4b show the principle of staggering the flow channel sections 11 according to an embodiment of the invention. The hexagonal cross-section shown in FIGURES 3a and 3b has been varied as a quadrilateral cross-section. The FIGURES disclose flow channels 10 comprising three channel sections 11.1, 11.2, and 11.3 that are successive in the fluid flow direction. The first channel section 11.1 is at least partly staggered or stepped relative to the second channel section 11.2 in the transverse direction of the flow channel 10. Similarly, the second channel section 11.2 is staggered relative to the third channel section 11.3 in the transverse direction of the flow channel 10. The third channel section 11.3 is located at the same transverse location as the first channel section 11.1. If the flow channel 10 comprises a further channel section 11 arranged behind the third channel section 11.3 or in front of the first channel section 11.1, the further channel section is located at the same transverse location as the second channel section 11.2, etc. Thus, every other channel section 11 in the fluid flow direction is placed at the same transverse location.

The successive channel sections 11 are staggered such that a leading edge 12 of the outlet opening 14 of the channel section crosses an inlet opening 13 of the following channel section 11, and vice versa. Typically, the leading edge 12 of the outlet opening 14 of the channel section 11 crosses the centre of the inlet opening 13 of the following channel section 11, and/or vice versa. The successive channel sections 11 are staggered such that the outlet opening 14 of the channel section 11 is in direct fluid flow communication with inlet openings 13 of at least two following channel sections 11. Typically, the outlet opening 14 of the channel section 11 is in direct fluid flow communication with inlet openings 13 of three or four following channel sections 11.

The matrix 9 is manufactured using an additive manufacturing technique, such as 3D printing.

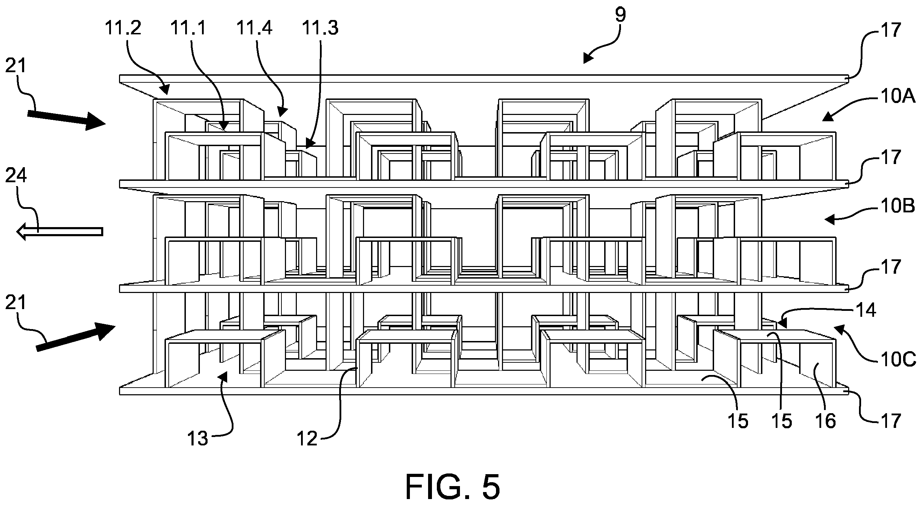

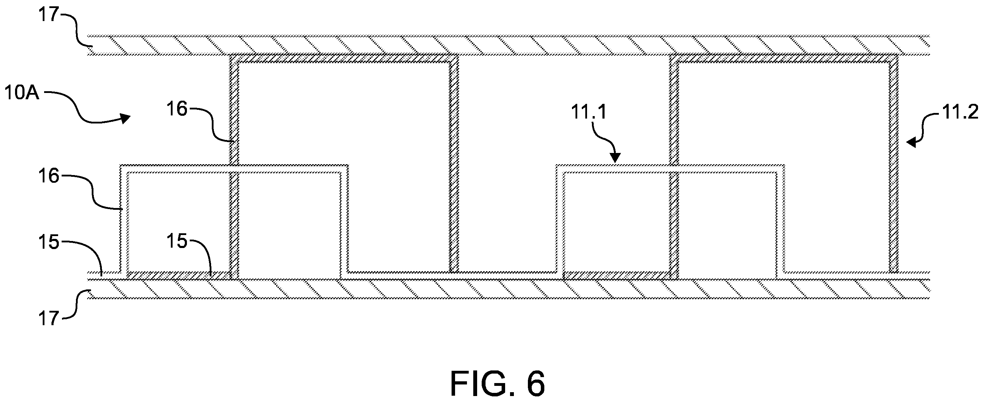

FIGURES 5 and 6 show a stacked variant of the staggered matrix design shown in FIGURES 4a and 4b. The matrix includes a plurality of flow channels 10A, 10B, 10C in an adjacent or stacked configuration. In the illustrated example the matrix has three such flow channels 10A, 10B, 10C. The purpose of each of the flow channels may be varied. For example, every second flow channel 10A, 10C is intended to accept outside air 21 and every second flow channel 10B is intended to expel exhaust air 24. In other words, air may in opposite directions between adjacent flow channels to exchange heat between said flows. Alternatively, the direction of air flow may be reversed repeatedly to store and extract heat absorbed into the matrix.

Each flow channel 10A, 10B, 10C has several, namely four, channel sections 11.1, 11.2, 11.3, 11.4 arranged in succession the fluid flow direction. Similarly to the embodiment of FIGURES 4a and 4b the successive channel sections 11.1, 11.2, 11.3, 11.4 are staggered, i.e. deviated transversely in respect to the air flow direction. The successive channel sections 11.1, 11.2, 11.3, 11.4 also vary in shape and size. In the example of FIGURE 4 every second channel section 11.1, 11.3 is relatively low and every second channel section 11.2, 11.4 is relatively tall. Differently to the embodiment of FIGURES 4a and 4b the channel sections 11.1, 11.2, 11.3, 11.4 are not constructed as a closed perimeter profile but as an open profile. The channel section may be constructed from a strip of material, such as aluminium, and folded into a square wave shape with alternating straight or curved parts 15, 16 joint in succession through a straight angle in alternating directions with the folding axis extending in the flow direction. The channel sections 11.1, 11.2, 11.3, 11.4 are attached to and between dividers 17, which may take the form a simple plate, such an aluminium plate.

The embodiment shown in FIGURES 5 and 6 may be varied by changing the shape of the channel sections 11.1, 11.2, 11.3, 11.4 into that of, e.g. a sine wave, triangle wave, or a sawtooth wave. Additionally or alternatively, the mutual shape or size difference between successive channel sections 11.1, 11.2, 11.3, 11.4 may be varied. Additionally or alternatively, the number of successive channel sections 11.1, 11.2, 11.3, 11.4 may be varied. Additionally or alternatively, the number of adjacent flow channels 10A, 10B, 10C may be varied.

The matrix proposed herein and exemplified in FIGURES 1 to 5 may be constructed of heat-absorbing material, such as aluminium, plastic, or synthetic fiber, which is very beneficial for a rotary or cross flow heat exchangers. Alternatively, the matrix material may be heat-conducting material, which is beneficial in return flow heat exchanger applications.

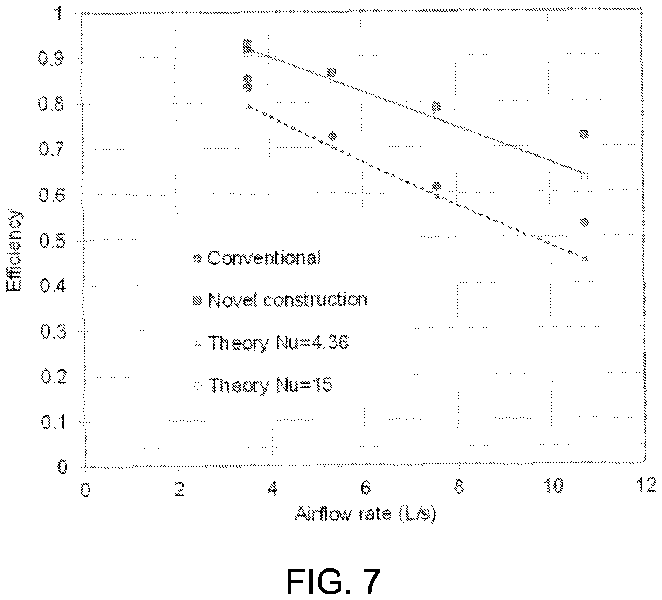

The staggered layers of a flow channel 10 greatly enhances the efficiency of the matrix 9 in transferring heat between two fluid flows associated with a heat exchanger comprising such a matrix. FIGURE 7 shows a diagram plotting airflow rate as liters per second on the horizontal axis and efficiency of the heat exchanger on the vertical axis. The diagram shows four data sets. The first data set is the theoretical values calculated for a conventional test matrix having a cylindrical shell with a diameter of 102 mm and depth of 100 mm and enclosing straight, i.e. un-staggered, hexagonal flow channels, each having an edge length of 0,75 mm and a diagonal length of 4 mm. The theoretical values are plotted on the lower line extending between 0,8 on the efficiency scale and about 3 l/s on the airflow rate scale and about 0,45 on the efficiency scale and about 11 l/s on the airflow rate scale. The measured data points of the test matrix are represented as the second data set as circles that appear to follow quite closely the theoretical model shown in triangles.

The third data set is the theoretical values calculated for a novel test matrix having a cylindrical shell with a diameter of 102 mm and depth of 100 mm and enclosing hexagonal flow channels, each having an edge length of 0,75 mm and a diagonal length of 4 mm. The text matrix had 10 layers of channel sections each having a length of 10 mm. Each successive layer was translated by half of the diameter of the opening flow channel, i.e. the greatest dimension across the opening. The translation was 2 mm in respect to the previous layer in the particular example. The theoretical values are plotted on the lower line extending between 0,92 on the efficiency scale and about 3 l/s on the airflow rate scale and about 0,72 on the efficiency scale and about 11 l/s on the airflow rate scale. The measured data points of the test matrix are represented as the fourth data set as solid squares that appear to follow quite closely the theoretical model shown in hollow squares.

As can be seen from the measurement data, the staggered flow channel design greatly outperforms the conventional straight flow channel design in efficiency. When calculated into a Nusselt number for the test matrices the data shows tripled Nusselt number for the staggered design compared to the conventional straight design.

It is to be noted that, while the efficiency of heat recovery is improved with the novel proposition, pressure loss across the heat exchanger is also increased. It has been discovered, however, that the energy savings gained through improved heat recovery outweigh the energy lost in increased flow resistance. For demonstrating the offset, let us consider a comparison example of a heat exchanger with a 100 mm deep matrix constructed, on the one hand, into conventional straight flow channels (as shown in FIGURES 2a and 2b) and, on the other hand, into presently proposed staggered flow channels (as shown in FIGURES 3a and 3b). The comparison test was performed onto a ventilation device comprising a fan for producing airflow and an associated heat exchanger for recovering heat contained in the volume of air flowing through the heat exchanger.

In the comparison test electric power used by fans is determined by:

$$P = \frac{q \cdot dp}{eta}$$

where $q$ is the airflow rate in m3/s, $dp$ is the pressure drop across the heat exchanger in Pa, and $eta$ is the combined efficiency of the electric motor and fan, which is assumed to be 0,5. During the test, target indoor temperature was set at 21 °C with the outdoor temperature being at 4 °C.

Ventilation heating energy, i.e. energy required to heat or cool outdoor air to the desired supply air temperature, is calculated by:

$$F = q_m \cdot c_P \cdot dT$$

where $q_m$ is the air mass flow rate in kg/s, $c_P$ is the heat capacity of air, i.e. 1 J·g$^{-1}$·K$^{-1}$, and $dT$ is the temperature difference between supply and outdoor air in K.

At an airflow of 7,8 l/s and using an average $dT$ of 17 K for indoor/outdoor temperatures, the power to heat or cool supply air is:

$$F = 0,0078 \, \frac{m^3}{s} \cdot 1,2 \, \frac{kg}{m^3} \cdot 1 \, \frac{J}{g \cdot K} \cdot 17 \, K = 159 \, W$$

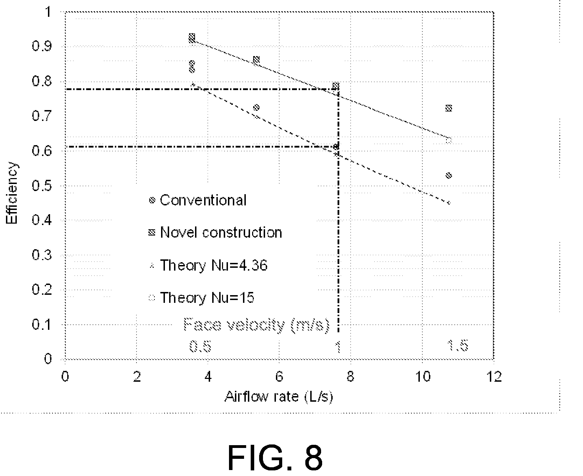

As will transpire from FIGURE 8, the heat recovery efficiency of the staggered design for the selected airflow is 78% while that of the conventional one is 60%. This means that energy recovery achieved with the staggered configuration is:

$$0,78 \cdot 159 \, W = 124 \, W$$

compared to that of a conventional configuration:

$$0,6 \cdot 159 W = 95 W$$

resulting in increase in energy recovery of 129W - 95W = 29 W.

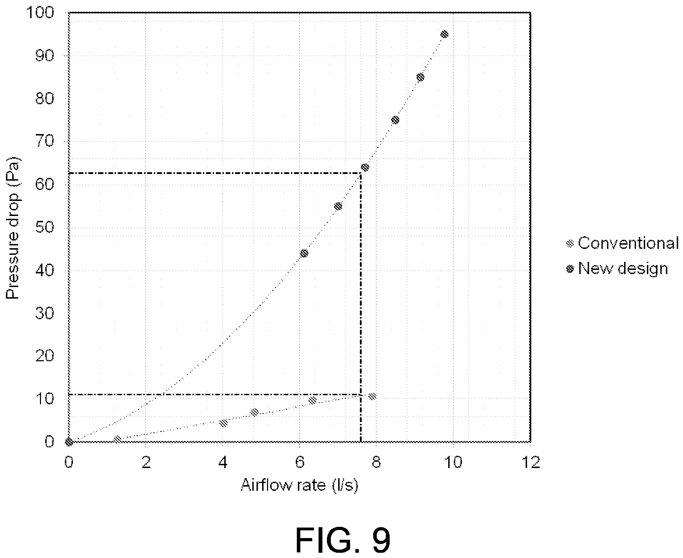

On the other hand and as shown in FIGURE 9, the pressure drop caused by the staggered heat recovery configuration is 63 Pa, whereby the fan has an energy consumption of:

$$\frac{0,0078 \, \frac{m^3}{s} \cdot 63 \, Pa}{0,5 \, W} = 1,0 \, W$$

at the selected airflow rate of 7,8 l/s.

FIGURE 9 also shows that the pressure drop caused by the conventional heat matrix configuration is 11 Pa, whereby the fan has an energy consumption of:

$$\frac{0,0078 \, \frac{m^3}{s} \cdot 11 \, Pa}{0,5 \, W} = 0,2 \, W$$

at the selected airflow rate of 7,8 l/s.

It follows that there is an increase of 0,8 W in fan energy consumption.

The results are summarized in the table below.

|  | Without heat recovery | Conventional matrix configuration | Staggered matrix configuration |
|---|---|---|---|
| Heating energy rate | 159 W | 159 W - 95 W = 64 W | 159 W - 124 W = 35 W |
| Increase in fan energy consumpion | - | 0,2 W | 1,0 W |

It can be concluded that the increase in heating energy savings, i.e. 64 W - 35 W = 29 W, greatly outweigh the increase in electric power consumption, i.e. 1,0 W - 0,2 W = 0,8 W. In the given example the power saving is 29 W - 0,8 W = 28,2 W.

It is to be noted that the example given above represents a non-optimized test setup. It is likely that greater savings could be achieved with matrix walls that are thinner than those constructed for the test device. Additionally, by increasing the length of the matrix, efficiency could be increased even more. However, even with a non-optimized solution energy savings are apparent.

While the present example is given for recovering heat from exhaust air, the reverse is also possible, i.e. using the staggered heat exchanger design for cooling in order to save energy in hot climates.

LIST OF REFERENCE NUMERALS

| NO. | FEATURE |
|---|---|
| 1 | heat exchanger |
| 2 | casing |
| 3 | rotary wheel |
| 4 | rotation axis |
| 5 | motor |
| 6 | drive unit |
| 7 | pulley |
| 8 | belt |
| 9 | matrix |
| 10 | flow channel |
| 11 | channel section |
| 12 | leading edge |
| 13 | inlet opening |
| 14 | outlet opening |
| 15 | part |
| 16 | part |
| 17 | divider |
| 21 | outside air |
| 22 | supply air |
| 23 | return air |
| 24 | exhaust air |

**Claims**

1. A recuperative heat exchanger (1) comprising a matrix (9), which is made of heat absorbing material and has a plurality of fluid flow channels (10A, 10B, 10C) extending there through in a flow direction of fluid, **characterized in that** the flow channels (10 A, 10B, 10C) comprise channel sections (11) that are attached to and between dividers (17) and that are successive in the flow direction and at least partly staggered relative to each other.

2. The recuperative heat exchanger (1) according to claim 1, wherein the successive channel sections (11) of the flow channel (10A, 10B, 10C) are staggered in a transverse direction of said flow channel (10).

3. The recuperative heat exchanger (1) according to claim 1 or 2, wherein the successive channel sections (11) are staggered relative to each other in two directions that are:

   - transverse in respect to each other, and
   - transverse in respect to the flow direction or flow channel (10).

4. The recuperative heat exchanger (1) according to claim any of the preceding claims, wherein the flow channels (10A, 10B, 10C) comprise two or more than two, preferably three or more than three, successive channel sections (11).

5. The recuperative heat exchanger (1) according to any of the preceding claims, wherein the successive channel sections (11) are staggered such that an edge (12) of the outlet opening of the channel section (11) crosses an inlet opening (13) of the following channel section (11).

6. The recuperative heat exchanger (1) according to claim 4, wherein an edge (12) of the outlet opening of the channel section (11) crosses the centre of the inlet opening (13) of the following channel section (11).

7. The recuperative heat exchanger (1) according to any of the preceding claims, wherein every other channel section (11) in the fluid flow direction is placed at the same transverse location.

8. The recuperative heat exchanger (1) according to any of the preceding claims, wherein the successive channel sections (11) are staggered such that the outlet opening of the channel section (11) is in direct fluid flow communication with inlet openings (13) of at least two following channel sections (11).

9. The recuperative heat exchanger (1) according to any of the preceding claims, wherein the flow channels (10A, 10B, 10C) have a rectangular, triangular, polygonal or sinusoidal cross-sectional shape.

10. The recuperative heat exchanger (1) according to any one of the preceding claims, wherein the heat exchanger (1) comprises a plurality of adjacent channels (10A, 10B, 10C), each channel comprising such a matrix (9).

11. Method of producing the matrix (9) of the recuperative heat exchanger (1) according to any one of the preceding claims 1 to 10, **characterized in that** the matrix (9) is manufactured using an additive manufacturing technique.


**Patentansprüche**

1. Rekuperativer Wärmetauscher (1), der eine Matrix (9) umfasst, die aus wärmeabsorbierendem Material gefertigt ist und eine Vielzahl von Fluidströmungskanälen (10A, 10B, 10C) aufweist, die sich dort hindurch in einer Fluidtrömungsrichtung erstrecken, **dadurch gekennzeichnet, dass** die Strömungskanäle (10A, 10B, 10C) Kanalabschnitte (11) umfassen, die an und zwischen Trennwänden (17) angebracht sind und in Strömungsrichtung aufeinander folgen und zumindest teilweise zueinander versetzt sind.

2. Rekuperativer Wärmetauscher (1) nach Anspruch 1, wobei die aufeinanderfolgenden Kanalabschnitte (11) des Strömungskanals (10A, 10B, 10C) in einer Querrichtung des Strömungskanals (10) versetzt sind.

3. Rekuperativer Wärmetauscher (1) nach Anspruch 1 oder 2, wobei die aufeinanderfolgenden Kanalabschnitte (11) in Bezug zueinander in zwei Richtungen versetzt sind, nämlich:

   - quer zueinander, und

- quer zur Strömungsrichtung oder zum Strömungskanal (10).

4. Rekuperativer Wärmetauscher (1) nach einem der vorstehenden Ansprüche, wobei die Strömungskanäle (10A, 10B, 10C) zwei oder mehr als zwei, vorzugsweise drei oder mehr als drei aufeinanderfolgende Kanalabschnitte (11) umfassen.

5. Rekuperativer Wärmetauscher (1) nach einem der vorstehenden Ansprüche, wobei die aufeinanderfolgenden Kanalabschnitte (11) versetzt sind, sodass eine Kante (12) der Auslassöffnung des Kanalabschnitts (11) eine Einlassöffnung (13) des folgenden Kanalabschnitts (11) kreuzt.

6. Rekuperativer Wärmetauscher (1) nach Anspruch 4, wobei eine Kante (12) der Auslassöffnung des Kanalabschnitts (11) die Mitte der Einlassöffnung (13) des folgenden Kanalabschnitts (11) kreuzt.

7. Rekuperativer Wärmetauscher (1) nach einem der vorstehenden Ansprüche, wobei jeder andere Kanalabschnitt (11) in der Fluidströmungsrichtung an der gleichen Querstelle platziert ist.

8. Rekuperativer Wärmetauscher (1) nach einem der vorstehenden Ansprüche, wobei die aufeinanderfolgenden Kanalabschnitte (11) versetzt sind, sodass die Auslassöffnung des Kanalabschnitts (11) in direkter Fluidströmungsverbindung mit Einlassöffnungen (13) von mindestens zwei folgenden Kanalabschnitten (11) steht.

9. Rekuperativer Wärmetauscher (1) nach einem der vorstehenden Ansprüche, wobei die Strömungskanäle (10A, 10B, 10C) eine rechteckige, dreieckige, polygonale oder sinusförmige Querschnittsform aufweisen.

10. Rekuperativer Wärmetauscher (1) nach einem der vorstehenden Ansprüche, wobei der Wärmetauscher (1) eine Vielzahl benachbarter Kanäle (10A, 10B, 10C) umfasst, wobei jeder Kanal eine solche Matrix (9) umfasst.

11. Verfahren zum Produzieren der Matrix (9) des rekuperativen Wärmetauschers (1) nach einem der vorstehenden Ansprüche 1 bis 10, **dadurch gekennzeichnet, dass** die Matrix (9) unter Verwendung einer additiven Fertigungstechnik hergestellt wird.


**Revendications**

1. Échangeur de chaleur à récupération (1) comprenant une matrice (9), qui est composée d'un matériau absorbant la chaleur et présente une pluralité de canaux d'écoulement de fluide (10A, 10B, 10C) s'étendant à travers celle-ci dans une direction d'écoulement de fluide, **caractérisé en ce que** les canaux d'écoulement (10A, 10B, 10C) comprennent des sections de canal (11) qui sont fixées à des diviseurs (17), et entre ceux-ci, et qui sont successives dans la direction d'écoulement et au moins partiellement décalées les unes par rapport aux autres.

2. Échangeur de chaleur à récupération (1) selon la revendication 1, dans lequel les sections de canal successives (11) du canal d'écoulement (10A, 10B, 10C) sont décalées dans une direction transversale dudit canal d'écoulement (10).

3. Échangeur de chaleur à récupération (1) selon la revendication 1 ou 2, dans lequel les sections de canal successives (11) sont décalées les unes par rapport aux autres dans deux directions qui sont :

   - transversales l'une par rapport à l'autre, et
   - transversales par rapport à la direction d'écoulement ou au canal d'écoulement (10).

4. Échangeur de chaleur à récupération (1) selon l'une quelconque des revendications précédentes, dans lequel les canaux d'écoulement (10A, 10B, 10C) comprennent deux ou plus de deux, de préférence trois ou plus de trois, sections de canal successives (11).

5. Échangeur de chaleur à récupération (1) selon l'une quelconque des revendications précédentes, dans lequel les sections de canal successives (11) sont décalées de telle sorte qu'un bord (12) de l'ouverture de sortie de la section de canal (11) croise une ouverture d'entrée (13) de la section de canal suivante (11).

6. , Échangeur de chaleur à récupération (1) selon la revendication 4, dans lequel un bord (12) de l'ouverture de sortie de la section de canal (11) croise le centre de l'ouverture d'entrée (13) de la section de canal suivante (11).

7. Échangeur de chaleur à récupération (1) selon l'une quelconque des revendications précédentes, dans lequel chaque autre section de canal (11) dans la direction d'écoulement de fluide est placée au niveau du même emplacement transversal.

8. Échangeur de chaleur à récupération (1) selon l'une quelconque des revendications précédentes, dans lequel les sections de canal successives (11) sont décalées de telle sorte que l'ouverture de sortie de la section de canal (11) soit en communication d'écoulement de fluide directe avec des ouvertures d'entrée (13) d'au moins deux sections de canal suivantes (11).

9. Échangeur de chaleur à récupération (1) selon l'une quelconque des revendications précédentes, dans lequel les canaux d'écoulement (10A, 10B, 10C) présentent une forme de section transversale rectangulaire, triangulaire, polygonale ou sinusoïdale.

10. Échangeur de chaleur à récupération (1) selon l'une quelconque des revendications précédentes, dans lequel l'échangeur de chaleur (1) comprend une pluralité de canaux adjacents (10A, 10B, 10C), chaque canal comprenant une telle matrice (9).

11. Procédé de fabrication de la matrice (9) de l'échangeur de chaleur à récupération (1) selon l'une quelconque des revendications précédentes 1 à 10, **caractérisé en ce que** la matrice (9) est fabriquée à l'aide d'une technique de fabrication additive.

9

FIG. 1b

10

1

2

21

8

22

24

4

5

6

7

23

3

FIG. 1a

FIG. 2a

FIG. 2b

11.1
11.2
11.3

11.10

9

FIG. 3a

10

FIG. 3b

FIG. 4b

FIG. 4a

FIG. 5

FIG. 6

FIG. 7

FIG. 8

FIG. 9

**EP 4 493 881 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3965695 A
- WO 2021173023 A1
- DE 3424159 A1
- US 2022057147 A1
- US 3733791 A
- DE 3224277 A1